# EUROPEAN PATENT SPECIFICATION

(11) **EP 3 751 844 B1**
(45) Date of publication and mention of the grant of the patent: **22.03.2023**
(21) Application number: 18905374.7
(22) Date of filing: 07.02.2018
(51) Int. Cl.: H04N 7/18, B61D 19/02, B61L 25/02

(54) **DOOR VIDEO DISPLAY SYSTEM AND MONITOR**
TÜRVIDEOANZEIGESYSTEM UND MONITOR
SYSTÈME ET MONITEUR D'AFFICHAGE VIDÉO DE PORTE

(43) Date of publication of application: 16.12.2020
(73) Proprietor: HITACHI KOKUSAI ELECTRIC INC., Tokyo 105-8039 (JP)
(72) Inventor: HIRAI, Seiichi, Kodaira-shi, Tokyo 187-8511 (JP)
(74) Representative: J A Kemp LLP
(86) International application number: PCT/JP2018/004168
(87) International publication number: WO 2019/155546

(56) References cited:
- JP-A- H0 971 240
- JP-A- H08 301 115
- JP-A- 2009 220 658
- JP-A- 2010 141 603
- JP-A- 2014 015 116
- JP-A- 2014 084 064
- JP-A- 2014 148 300
- JP-A- 2014 221 614
- JP-A- 2016 199 178

## Description

The present invention relates to a door image display system for displaying images of a plurality of doors that a train has.

To secure the safety of passengers who get on and off a train is an important issue for the operation of a train. As measures for that, railway companies have made efforts to secure the safety by using various methods such as the utilization of a conventional departure bell and a conventional platform monitoring camera, and in recent years, the installment of platform safety gates.

One example of the above-described measures is a door image display system. This is a system where cameras are installed in the vicinity of the doors on the two sides of the cars of a train so that images of the passengers who are getting on or off the train in a station are taken, and these images are displayed on a monitor installed in the cabin of the train (see WO2015/145736A1).

JP H8-301115 discloses a train getting on/off monitoring system. The images from cameras monitoring doors of the trains are displayed on monitors in the driver cabin. JP H9-71240 discloses a door monitoring system for train. The driver can individually control opening and closing of doors of the train. When alerted that a door has not closed properly, the image of that door is displayed.

By using a door image display system as described above, a trainman can close the doors after confirming the images that are displayed on a monitor in addition to directly checking visually as a conventional method. This can enhance the visuality of the areas in the vicinity of the doors of the cars that are away from the trainman as compared to a case of directly checking visually, and therefore, it becomes possible to close the doors in a safer manner. Accidents, however, still occur when passengers get on or off a train, and thus, it is requested to further secure the safety. In addition, the conventional system is based on a mechanism where all the doors on the platform side close or open simultaneously, and therefore, it is necessary for a trainman to confirm the appearance of all the doors again before closing the doors if the doors open due to someone rushing for a car or a bag being caught between a pair of doors, which increases the burden on the trainman, and at the same time is very inefficient.

The present invention is provided in view of the above-described conventional situation, and an aim thereof is to propose a technology that makes it possible to reduce the burden on a trainman while securing the safety of the passengers when the doors of a train are opened or closed.

In order to achieve the above-described object, the present invention provides the following configuration of a door image display system. That is to say, the door image display system to be equipped in a train that has a plurality of doors is characterized by being provided with: a plurality of cameras that take images of the plurality of doors; a monitor that displays a plurality of door camera images taken by the plurality of cameras and a button that receives an operation to instruct the opening or closing of the door shown in the door camera image; and a controller that outputs a communication signal including an instruction to open or close the door that corresponds to the operated button in response to the operation of the button.

In addition, the door image display system according to the present invention is provided with such a constituent feature that on the basis of a specific station display information set for each station that includes the designation of the door of which the door camera image is to be displayed with a highlight in the train stopped at the station, the controller controls such that the door camera image of the designated door to be highlighted on the monitor.

The door image display system according to the present invention may further be provided with such a constituent feature that in the case where a communication signal including an instruction to close the door is outputted, the controller controls such that the door camera image of the instructed door is highlighted on the monitor in response to the reception of a communication signal including a response to the effect that the closure of the door has failed.

Here, the monitor may have the controller integrated therewith. That is to say, the monitor to be equipped in a train that has a plurality of doors and to display a plurality of door camera images that are gained by taking images of the respective doors with cameras may be provided with: a display that displays the plurality of door camera images and a button that receives an operation to instruct the opening or closing of the door shown in the door camera image; an operation detector that detects the operation of the button; and an opening and closing controller that outputs a communication signal including an instruction to open or close the door that corresponds to the operated button in response to the detection of the operation of the button by the operation detector.

The present invention can allow a trainman in a train to not only confirm the appearance of each door on a monitor, but also to individually designate the door that is to be instructed to be opened or closed on the same monitor, and therefore, the burden on the trainman can be reduced while securing the safety of the passengers when the doors of the train are opened or closed.
FIG. 1 is a diagram schematically showing a train in which the door image display system according to one embodiment of the present invention is equipped;
FIG. 2 is a diagram showing an example of the device configuration of the door image display system according to one embodiment of the present invention;
FIG. 3 is a diagram showing an example of the function configuration of the respective devices in the door image display system in FIG. 2;
FIG. 4 is a diagram showing an example of the display of the monitor in the door image display system in FIG. 2;
FIG. 5 is a diagram showing an example of the operation sequence in the door image display system in FIG. 2;
FIG. 6 is a diagram showing an example (continuation of FIG. 5) of the operation sequence in the door image display system in FIG. 2;
FIG. 7 is a diagram showing an example (continuation of FIG. 6) of the operation sequence in the door image display system in FIG. 2; and
FIG. 8 is a diagram showing another example of the operation sequence in the door image display system in FIG. 2.

The door image display system according to one embodiment of the present invention is described in reference to the drawings.

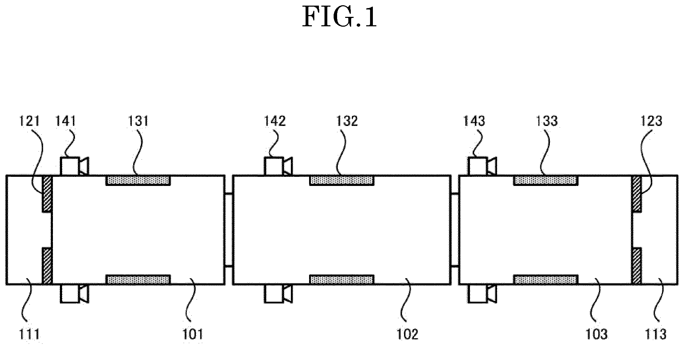

FIG. 1 schematically shows a train in which the door image display system according to one embodiment of the present invention is equipped. The train in this example is formed of cars 101 to 103 that are connected to each other. FIG. 1 is an overhead view showing the appearance of these cars. Though the train is formed of three cars in this example, the number of cars may be two or less or four or more.

The car 101 at one end of the train includes a cabin 111 where monitors 121 are installed inside. The car 103 at the other end of the train also includes a cabin 113 where monitors 123 are installed inside. Though one cabin is provided in each of the cars at the ends in this example, there may be no such limitation for a train that is formed by connecting a plurality of shorter trains to each other. In this example one monitor is installed on each side, left and right, in each cabin; however, the left and right monitors may be integrated in such a manner that one monitor is installed in each cabin.

The car 101 has a door 131 on either side, left and right, and a door camera 141 for taking images of the door and the vicinity thereof is installed on the outside of either side, left and right, of the car 101. Likewise, the cars 102 and 103 are provided with doors 132 and 133 and door cameras 142 and 143. In this example one door is provided on either side, left and right, of each car; however, two or more doors may be provided on either side, left and right, of each car. In addition, one door camera is installed for one door in this example; however, a plurality of door cameras may be installed for one door or one door camera may be installed for a plurality of doors.

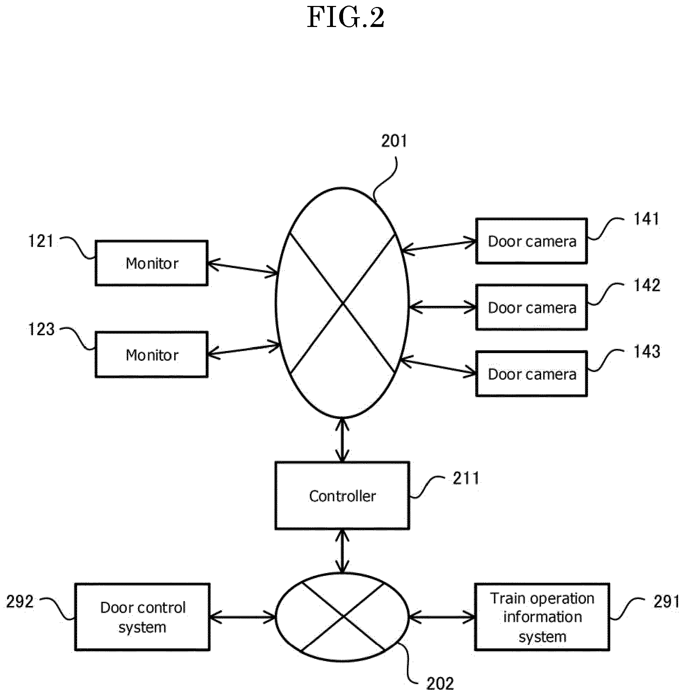

FIG. 2 shows an example of the device configuration of the image display system according to one embodiment of the present invention.

In the door image display system in this example, a controller 211, monitors 121 and 123, and door cameras 141 to 143 are connected to a network 201 in such a manner that mutual communication is possible in the configuration. In addition, the door image display system is connected to a train operation information system 291 and a door control system 292 through a network 202 in such a manner that mutual communication is possible in the configuration.

The networks 201 and 202 are formed of a communication line for connecting the respective devices to each other for data communication. The means of data communication include USB (Universal Serial Bus), serial communication, Ethernet (registered trademark), and wireless, and the present invention may use any of these means. In this example, the door image display system exclusively uses the network in the configuration. This is to prevent a large amount of image-related data flowing through the network 201 from interfering with control-related data communication through the network 202. By providing another means for preventing the interference of the control-related data communication, the network 201 and the network 202 may be integrated.

The controller 211 is a unit for controlling the respective devices in the door image display system, and it also inputs or outputs information to and from the train operation information system 291 and the door control system 292. The controller 211 is formed of an operation circuit such as a CPU (central processing unit), a temporary storage memory such as a RAM (random access memory), a recording medium such as an HDD, a data transfer bus, an external input/output interface, a power supply circuit, and the like.

The monitors 121 and 123 are devices that display images on a screen and provide an interface for the user operation. The monitors 121 and 123 are formed of an operation circuit such as a CPU, a temporary storage memory such as a RAM, a recording medium such as an HDD, a data transfer bus, an external input/output interface, a power supply circuit, a display part such as a liquid crystal display, a user input part such as a touch panel, and the like.

The door cameras 141 to 143 are devices that are installed on the outside of a car so as to face the door side so that images of the passengers who get on and off the train via the door can be taken as the main subjects. The door cameras 141 to 143 are formed of a lens, an imaging element such as a CCD (charge coupled device) or a CMOS (complementary metal oxide semiconductor), an A/D (analog to digital) conversion circuit, a temporary storage memory such as a RAM, a data transfer bus, a timing circuit, an external input/output interface, a power supply circuit, and the like.

The train operation information system 291 is a system for managing the operation information of a train and provides this information to subsystems that include the door image display system. As the operation information, the running speed of a train, the state of a train stopping at a station (whether or not a train is stopped at a station), the current location at which the train is running, and the stations at which the train is to stop can be cited as examples.

The door control system 292 is a system for controlling the opening and closing of the doors 131 to 133. The mechanism for opening or closing the doors 131 to 133 may be the one using compressed air or the one using a motor, and the present invention includes either embodiment.

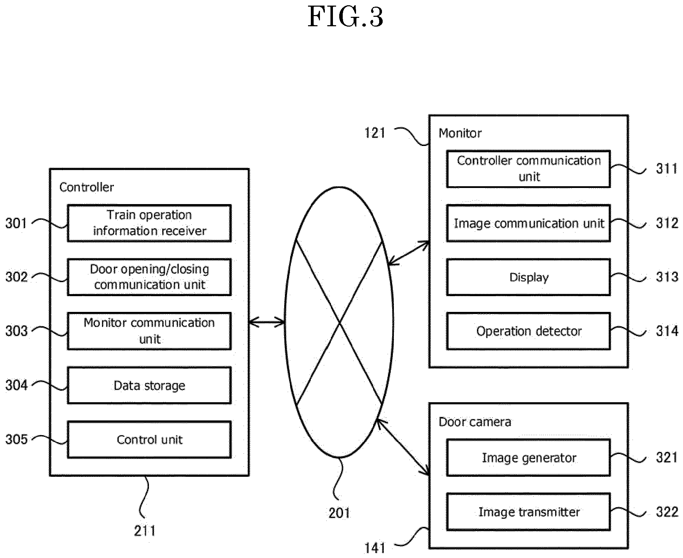

FIG. 3 shows an example of the function configuration of the respective devices in the door image display system in FIG. 2.

The controller 211 is provided with respective processing units of a train operation information receiver 301, a door opening/closing communication unit 302, a monitor communication unit 303, a data storage 304, and a control unit 305.

The train operation information receiver 301 is a processing unit for receiving data outputted from the train operation information system 291. For example, the arrival of data at the external input/output interface is detected, and the data is stored in the temporary storage memory. In this example, the information on the timing according to which a train stops at a station and the data concerning the stations at which the train is to stop are received.

The door opening/closing communication unit 302 is a processing unit for allowing the door opening and closing information to be communicated vis-a-vis the door control system 292 via the external input/output interface. The door opening and closing information is, for example, a door open or close instruction that is transmitted from the controller 211 to the door control system 292, and the door open or close state that is transmitted from the door control system 292 to the controller 211.

The monitor communication unit 303 is a processing unit for allowing control information to be communicated vis-a-vis the monitors 121 and 123 via the external input/output interface. The control information is, for example, the screen display instruction that is transmitted from the controller 211 to the monitors 121 and 123, and a screen operation event that is transmitted from the monitors 121 and 123 to the controller 211.

The data storage 304 is a processing unit for storing various types of setting information that are required for the operation of the door image display system. The setting information is, for example, the period of time during which the state of the doors being open continues at a station, and the degree of attention that is required for each door.

The control unit 305 is a processing unit for instructing the process to each of the above-described processing units.

The monitor 121 is provided with respective processing units of a controller communication unit 311, an image communication unit 312, a display 313, and an operation detector 314. Though not show, the monitor 123 is provided with respective processing units of a controller communication unit 311, an image communication unit 312, a display 313, and an operation detector 314 in the same manner as the monitor 121.

The controller communication unit 311 is a processing unit for communicating control information vis-a-vis the controller 211 via the external input/output interface. The control information includes, for example, a screen display instruction to be transmitted from the controller 211 to the monitor 121 (or monitor 123), and a screen operation event to be transmitted from the monitor 121 (or monitor 123) to the controller 211.

The image communication unit 312 is a processing unit for receiving image data outputted from the door cameras 141 to 143. For example, the arrival of data at the external input/output interface is detected so as to be stored in the temporary storage memory. Simultaneous parallel processing is possible that covers the data for all the door cameras that form the system. In this example, image data from three door cameras can be received simultaneously.

The display 313 is a processing unit for converting image data received by the image communication unit 312 to a form that can be perceived by the user and displaying the image data on a screen. In the case where the image data is compressed images, for example, an operation circuit is used to decompress the compressed images so that the images are converted to an RGB form for display. In the same manner as the image communication unit 312, simultaneous parallel processing is possible to cover the data for all the door cameras that form the system. In this example, image data from three door cameras can be displayed simultaneously.

The operation detector 314 is a processing unit for detecting and acquiring the instruction operation by the user. For example, a touch panel operation is detected together with the coordinates of the touched point so that the instruction operation by the user can be determined from the coordinates of the touched point. In this example, in the case where the coordinates of the touched point are the coordinates where a door open button is displayed, the instruction operation is determined to be a door open instruction operation. In the case where the coordinates of the touched point are the coordinates where a door close button is displayed, the instruction operation is determined to be a door close instruction operation.

The door camera 141 is provided with respective processing units of an image generator 321 and an image transmitter 322. Though not shown, door cameras 142 and 143 are provided with respective processing units of an image generator 321 and an image transmitter 322 in the same manner as the door camera 141.

The image generator 321 is a processing unit for converting light that has passed through a lens to an electrical signal in an imaging element, digitally converting the electrical signal in an A/D conversion circuit, carrying out image compression, and storing the compressed images in a temporary storage memory as image data. The image data is compressed image data such as JPEG (Joint Photograph Experts Group), MPEG (Moving Picture Experts Group), and H.264/MPEG-4 AVC (Advanced Video Coding).

The image transmitter 322 is a processing unit for outputting the image data stored in the temporary storage memory to a network from the external input/output interface in response to a data request from the outside or an instruction from the timing circuit.

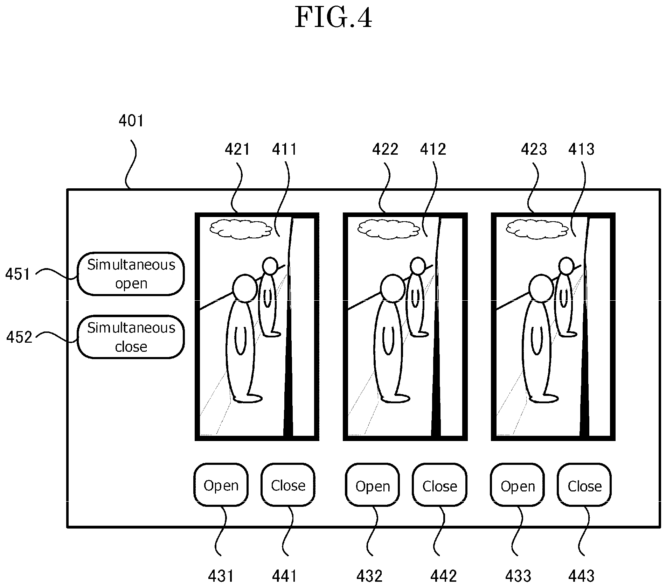

FIG. 4 shows an example of the display on a monitor in the door image display system in this example.

The screen 401 displayed on the monitor has door camera image display regions 411 to 413, door camera image display frames 421 to 423, individual door open buttons 431 to 433, individual door close buttons 441 to 443, simultaneous door open button 451, and simultaneous door close button 452.

The door camera image display regions 411 to 413 are regions for displaying image data from the door cameras 141 to 143. FIG. 4 shows an example where the monitor 121 displays the image data from the door cameras 141 to 143 that are located on the left side relative to the direction in which the train moves with the car 103 as the lead car. The door camera image display region 411 displays an image from the door camera 141, the door camera image display region 412 displays an image from the door camera 142, and the door camera image display region 413 displays an image from the door camera 143. The displays are automatically updated. The automatic update is implemented by repeating a processing series at intervals during which images from the door cameras are generated. In the processing series, image data generated in the image generator 321 of each door camera is transmitted to the monitor via the image transmitter 322, and the monitor receives each piece of image data in the image communication unit 312 so that the image data is displayed on the display 313.

The door camera image display regions 411 to 413 have three display states, a door open state, a door close state, and a non-display state. The door open display state is a display state in the case where the train is stopped at a station and the doors are open, and for example, a door camera image generated with color is displayed in this region with color as it is. Meanwhile, the door close display state is a display state in the case where the train is stopped at a station and the doors are closed, and for example, a door camera image generated with color is grey scale converted before being displayed in this region. The non-display state is a display state while the train is running, and for example, the door camera image is not displayed and a black image is displayed instead.

In this example, the door open display state, the door close display state, and the non-display state are displayed in different manners; however, the door close display state and the non-display state may be displayed in the same manner.

In this example, the screen of one monitor is divided into three for displaying images from three door cameras; however, the screen may be divided into N for displaying images from N door cameras (N is a natural number other than three). Alternatively, a plurality of screens may be divided into N for displaying images from N door cameras in such a manner that the plurality of monitors is used in concert.

In addition, though this example shows the arrangement where the image from the door camera on the lead car is arranged on the right and the images from the door cameras in the following cars are aligned toward the left in the order of the cars, the arrangement may allow the door camera images to be aligned in a different manner.

In this example, the screen is equally divided into three for displaying images from three door cameras; however, the image from a certain door camera may be displayed with a different dimension from the images from the other door cameras. In the case where it is desired to attract the attention of a trainman to the image from a certain door camera, for example, the display area for this image may be enlarged so that this image is displayed larger than the other images.

In the above-described case, there is a difference in the aspect ratio between the door camera image display regions and the door camera images, and there is a difference in the display resolution between the monitor and the door camera images, and therefore, certain areas are cut out from the original door camera images so as to correspond to the aspect ratio of the door camera image display regions and are enlarged or downsized so as to correspond to the display resolution of the monitor when the images from the three door cameras are displayed. At this time, concerning the above-described door camera image to which it is desired for the attention of the trainman to be drawn, not only the display area may be enlarged, but also the range of cutting out may be increased so that the door camera image covering a range at a wider angle can be displayed.

The door camera image display frames 421 to 423 are border lines that are displayed outside the door camera image display regions 411 to 413. The main reason why they are provided is to clarify the borders between the door camera images. Though FIG. 4 shows the display frames as simple black lines, the color, the width, the form, or the like of a certain display frame may be varied. In the case where it is desirable for the attention of the trainman to be drawn to a certain door camera image, for example, the display frame thereof may be displayed with thick red lines or may flash.

Individual door open buttons 431 to 433 are buttons for receiving an instruction to open an individual door (door open instruction) from the trainman. In this example, the individual door open button 431 and the door 131 are connected, the individual door open button 432 and the door 132 are connected, and the individual door open button 433 and the door 133 are connected. When any of the individual door open buttons 431 to 433 is pushed, a door open instruction is transmitted to the door that is connected to the button so that the door opens. The individual door open buttons 431 to 433 are arranged in the vicinity of the door camera image display regions where the door camera image of the door is displayed so that the connection relationship with the door can be easily seen by the trainman. In this example, the individual door open button 431 is arranged directly beneath the door camera image display region 411, the individual door open button 432 is arranged directly beneath the door camera image display region 412, and the individual door open button 433 is arranged directly beneath the door camera image display region 413.

Individual door close buttons 441 to 443 are buttons for receiving an instruction to close an individual door (door close instruction) from the trainman. In this example, the individual door close button 441 and the door 131 are connected, the individual door close button 442 and the door 132 are connected, and the individual door close button 443 and the door 133 are connected. When any of the individual door close buttons 441 to 443 is pushed, a door close instruction is transmitted to the door that is connected to the button so that the door closes. The individual door close buttons 441 to 443 are arranged in the vicinity of the door camera image display regions where the door camera image of the door is displayed so that the connection relationship with the door can be easily seen by the trainman. In this example, the individual door close button 441 is arranged directly beneath the door camera image display region 411, the individual door close button 442 is arranged directly beneath the door camera image display region 412, and the individual door close button 433 is arranged directly beneath the door camera image display region 413.

In the case where there is a door in the door open state in the above description, it is not necessary to further push the individual door open button that corresponds to the door, and therefore, the individual door open button may be inactivated. Likewise, in the case where there is a door in the door close state, it is not necessary to further push the individual door close button that corresponds to the door, and therefore, the individual door close button may be inactivated.

In this example, a pair of an individual door open button and an individual door close button is provided for one door; however, the individual door open button and the individual door close button may be integrated as one individual door button. That is to say, the button functions as a button that receives a door close instruction at the time of the door open state and as a button that receives a door open instruction at the time of the door close state, and thus, the button may have operability as that of a so-called toggle button.

Though the individual door open buttons and the individual door close buttons in FIG. 4 are buttons on which a character is imposed, they may be provided as icon buttons using a designed pattern. The same can be applied to the below-described simultaneous door open button or simultaneous door close button.

In addition, the door open instruction and the door close instruction may be instructions for a plurality of doors instead of one door. In the case where an individual door button and two doors 131 and 132 are connected, for example, a door open instruction or a door close instruction is transmitted to the door 131 and the door 132 when this individual door button is pushed. At this time, it is desirable for the individual door button to be arranged in the vicinity of the door camera image display regions 411 and 412 (directly beneath the area between the door camera image display region 411 and the door camera image display region 412, for example) on the screen 401. As a result, the number of times of pushing the individual door buttons by the trainman can be reduced.

The simultaneous door open button 451 is a button for receiving an instruction to simultaneously open the doors (simultaneous door open instruction) from the trainman. When the simultaneous door open button 451 is pushed, a door open instruction is transmitted to the doors 131 to 133 so that all the doors are opened simultaneously.

The simultaneous door close button 452 is a button for receiving an instruction to simultaneously close the doors (simultaneous door close instruction) from the trainman. When the simultaneous door close button 452 is pushed, a door close instruction is transmitted to the doors 131 to 133 so that all the doors are closed simultaneously.

In the case where all of the doors the doors 131 to 133 are in the door open state in the above description, it is not necessary to further push the simultaneous door open button 451, and therefore, the simultaneous door open button 451 may be inactivated. Likewise, in the case where all of the doors 131 to 133 are in the door close state, it is not necessary to further push the simultaneous door close button 452, and therefore, the simultaneous door close button 452 may be inactivated.

The door camera image display regions 411 to 413 are enlarged for display or displayed on the entire screen when the mouse is double-clicked or panel is touch operated. As a result, the trainman can confirm the appearance in the vicinity of the door with a finer image. In this case, the screen 401 returns to its original state as shown in FIG. 4 when the trainman again carries out the same operation.

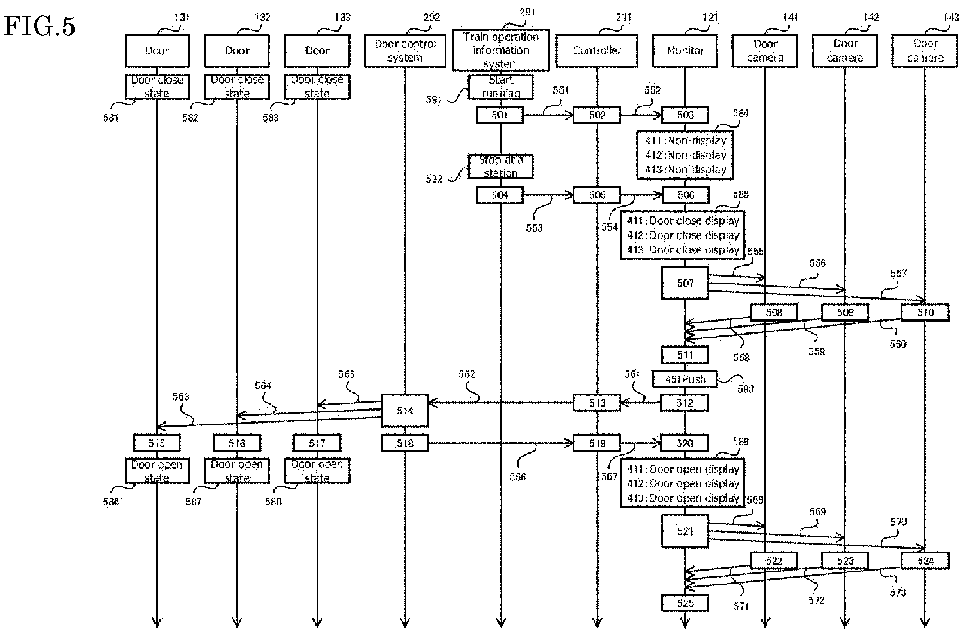

FIGS. 5 to 7 show an example of the operation sequence in the door image display system in this example. In these figures, the devices in the door image display system in this example are shown in the lateral direction and the time sequence is shown in the longitudinal direction.

In this example, a sequence of operations of a train starting from the running of a train, arriving at a station, stopping at the station, opening the doors, allowing passengers to get on and off, closing the doors and departing is described as a general operation of a train. FIG. 5 shows the operations of a train starting from the running of a train, arriving at a station, stopping at the station, and opening the doors from among the above-described sequence of operations.

In the initial state, the doors 131 to 133 are respectively in the door close states 581 to 583, and the train starts running in this state.

In accordance with the time 591 when the train starts running, the train operation information system 291 transmits the communication signal 551 that includes the information that the train has started running to the controller 211 (process 501).

The controller 211 receives the communication signal 551 in the train operation information receiver 301. Then, the control unit 305 determines that the door camera image display region 411 is turned to the non-display state, the door camera image display region 412 is turned to the non-display state, and the door camera image display region 413 is turned to the non-display state, and transmits the communication signal 552 that includes an instruction to this effect to the monitor 121 from the monitor communication unit 303 (process 502).

The monitor 121 receives the communication signal 552 in the controller communication unit 311. Then, the display 313 follows the received instruction and switches the door camera image display region 411 to the non-display state, the door camera image display region 412 to the non-display state, and the door camera image display region 413 to the non-display state (process 584). In this example, a state where a black image is displayed instead of a door camera image is a non-display state. At this time, the monitor 121 allows the image communication unit 312 to stop the door camera image acquisition process to be carried on the door cameras 141 to 143 (process 503).

When the train is running, this state is maintained.

Next, the train arrives at the station, and at the time 592 when the train stops, the train operation information system 291 transmits the communication signal 553 that includes information on the stoppage at a station to the controller 211 (process 504). The information on the stoppage at a station includes not only event information that indicates the stoppage at a station, but also information that specifies the station (station specifying information). Identification numbers that are allocated for the respective stations along a train line can be cited as an example of the station specifying information.

The controller 211 receives the communication signal 553 in the train operation information receiver 301. Then, the control unit 305 determines that the door camera image display region 411 is turned to the door close display state, the door camera image display region 412 is turned to the door open display state, and the door camera image display region 413 is turned to the door close display state, and the communication signal 554 that includes an instruction to this effect is transmitted to monitor 121 from the monitor communication unit 303 (process 505).

At this time, the controller 211 takes out specific station display information from the data storage 304 by using the station specifying information that is included in the communication signal 553. The specific station display information is information concerning the display that is specific to the station. The specific station display information includes the setting of designation of the doors of which the door camera image is to be displayed with a highlight while the train is stopped at the station and the manner of the display with a highlight. The specific station display information is provided from an external system, for example, a higher rank system.

An example is assumed where the station gates of a station A are located close to the door 131, and thus, the number of passengers who get on and off through the door 131 is constantly large, and an event of a passenger rushing into a car takes place many times. In this case, the enlargement of the display area of the door camera image display region 411 for displaying an image from the door camera 141 as compared to the other door camera image display regions is set in the specific station display information in order to gain better visibility for the images from the door camera 141 that show the door 131 and to draw the attention of the trainman. Not only a simple enlargement of the display, but also an enlargement of the display with the image from the door camera 141 being cut out at a wide angle are set in the specific station display information in order to allow a passenger who is highly likely to rush in to be viewed at an early stage.

Here, the specific station display information in the above-described example is static information that had been led out from the station structure so as to be provided in advance; however, the specific station display information may be generated dynamically. For example, a means for measuring the open time of each door whenever a train stops at the station A is provided so that the average opening time of each door is found from the newest measurement value and several measurement values in the past through moving average calculation, and thus, the average open time of each door is stored in the data storage 304 as specific station display information. Thus, when the train stops at station A the next time, the size of the door camera image display region of each door camera is determined from the relationship between the respective doors in respect to the average open time on the basis of the average open time of each door stored in the data storage 304. This is based on the assumption that the longer the average open time of a door is, the greater the number of passengers who use the door is, and thus, the greater the necessity of the trainman to pay attention at the time of closing the door is. Here, the system is not limited to the comparison of the average open time of each door, and for example, the door camera image display region of a door of which the average open time is greater than a predetermined threshold value may be made larger than that of the other doors.

As described above, in the case where there is specific station display information, the communication signal 554 is made to include a specific display instruction for instructing the display that is specific to this station before being transmitted to the monitor 121. In any case, the data storage 304 can store information in any mode. It is also assumed that how crowded each door is differs due to various factors such as the season, the day, the time zone, and the weather, and therefore, specific station display information is prepared for each of these factors or for each of the combinations thereof so that the specific station display information that corresponds to the situation when the specific station display information is used can be selected for use.

The monitor 121 receives the communication signal 554 in the controller communication unit 311. Then, the display 313 follows the received instruction and switches the door camera image display region 411 to the door close display state, the door camera image display region 412 to the door close display state, and the door camera image display region 413 to the door close display state (state 585). In this example, the door close display state is the state where the door camera image is displayed with grey (process 506).

At this time, the monitor 121 allows the image communication unit 312 to start the door camera image acquisition process and transmits the communication signal 555 that includes an image request for the door camera 141, the communication signal 556 that includes an image request for the door camera 142, and the communication signal 557 that includes an image request for the door camera 143, respectively (process 507).

The door camera 141 receives the communication signal 555 in the image transmitter 322. Then, the image transmitter 322 follows the received request and transmits the communication signal 558 that includes an image generated in the image generator 321 to the monitor 121 (process 508).

The door camera 142 receives the communication signal 556 in the image transmitter 322. Then, the image transmitter 322 follows the received request and transmits the communication signal 559 that includes an image generated in the image generator 321 to the monitor 121 (process 509).

The door camera 143 receives the communication signal 557 in the image transmitter 322. Then, the image transmitter 322 follows the received request and transmits the communication signal 560 that includes an image generated in the image generator 321 to the monitor 121 (process 510).

The monitor 121 receives the communication signals 558, 559 and 560, respectively, in the image communication unit 312. The display 313 decodes each image (color image) that is included in the respective received communication signals, and then carries out a grey scale conversion. In addition, the image from the door camera 141, the image from the door camera 142, and the image from the door camera 143 are displayed in the door camera image display region 411, the door camera image display region 412, and the door camera image display region 413, respectively. At this time, the display 313 resizes each door camera image to the display size of the corresponding door camera image display region for display (process 511).

In the case where the communication signal 554 includes a specific display instruction, the display 313 in the monitor 121 carries out the process that follows the contents of this instruction. For example, the display size of the door camera image display regions 411 to 413 is controlled, and the frame width and the frame color of the door camera image display frames 421 to 423 are controlled.

Though not shown, the processes 507 to 511 are carried out repeatedly while the present state continues.

At this time, the trainman pushes the simultaneous door open button 451 displayed on the monitor 121 (operation 593).

The monitor 121 allows the operation detector 314 to detect this pushing operation and transmits the communication signal 561 that includes a report of the simultaneous door open button 451 being pushed to the controller 211 from the controller communication unit 311 (process 512).

The controller 211 receives the communication signal 561 in the monitor communication unit 303. Then, the communication signal 562 that includes a simultaneous door open instruction is transmitted to the door control system 292 from the door opening/closing communication unit 302 (process 513).

The door control system 292 receives the communication signal 562 and transmits the communication signals 563 to 565 that include a door open instruction to the doors 131 to 133, respectively (process 514).

The doors 131 to 133 receive the communication signals 563 to 565, respectively, and open (processes 515 to 517). As a result, the doors 131 to 133 are respectively in the door open state 586 to 588.

The door control system 292 confirms that the doors 131 to 133 are all turned to be in the door open state, and then transmits the communication signal 566 that includes a report of the completion of the simultaneous door opening to the controller 211 (process 518).

The controller 211 receives the communication signal 566 in the door opening/closing communication unit 302. Then, the control unit 305 determines that the door camera image display region 411 is turned to the door open display state, the door camera image display region 412 is turned to the door open display state, and the door camera image display region 413 is turned to the door open display state, and transmits the communication signal 567 that includes an instruction to this effect to the monitor 121 from the monitor communication unit 303 (process 519).

The monitor 121 receives the communication signal 567 in the controller communication unit 311. Then, the display 313 follows the received instruction and switches the door camera image display region 411 to the door open display state, the door camera image display region 412 to the door open display state, and the door camera image display region 413 to the door open display state (state 589). In this example, the door open display state is a state where a door camera image is displayed with color (process 520).

At this time, the monitor 121 allows the image communication unit 312 to start the door camera image acquisition process (this has already been carried out repeatedly in this example, and therefore is maintained), and transmits the communication signal 568 that includes an image request for the door camera 141, the communication signal 569 that includes an image request for the door camera 142, and the communication signal 570 that includes an image request for the door camera 143, respectively (process 521).

The door camera 141 receives the communication signal 568 in the image transmitter 322. Then, the image transmitter 322 follows the received request and transmits the communication signal 571 that includes an image generated in the image generator 321 to the monitor 121 (process 522).

The door camera 142 receives the communication signal 569 in the image transmitter 322. Then, the image transmitter 322 follows the received request and transmits the communication signal 572 that includes an image generated in the image generator 321 to the monitor 121 (process 523).

The door camera 143 receives the communication signal 570 in the image transmitter 322. Then, the image transmitter 322 follows the received request and transmits the communication signal 573 that includes an image generated in the image generator 321 to the monitor 121 (process 524).

The monitor 121 receives the communication signals 571, 572 and 573, respectively, in the image communication unit 312. The display 313 decodes each image (color image) that is included in the respective received communication signals. Then, the image from the door camera 141, the image from the door camera 142, and the image from the door camera 143 are displayed in the door camera image display region 411, the door camera image display region 412, and the door camera image display region 413, respectively. At this time, the display 313 resizes each door camera image to the display size of the corresponding door camera image display region for display (process 525).

Though not shown, the processes 521 to 525 are carried out repeatedly while the present state continues.

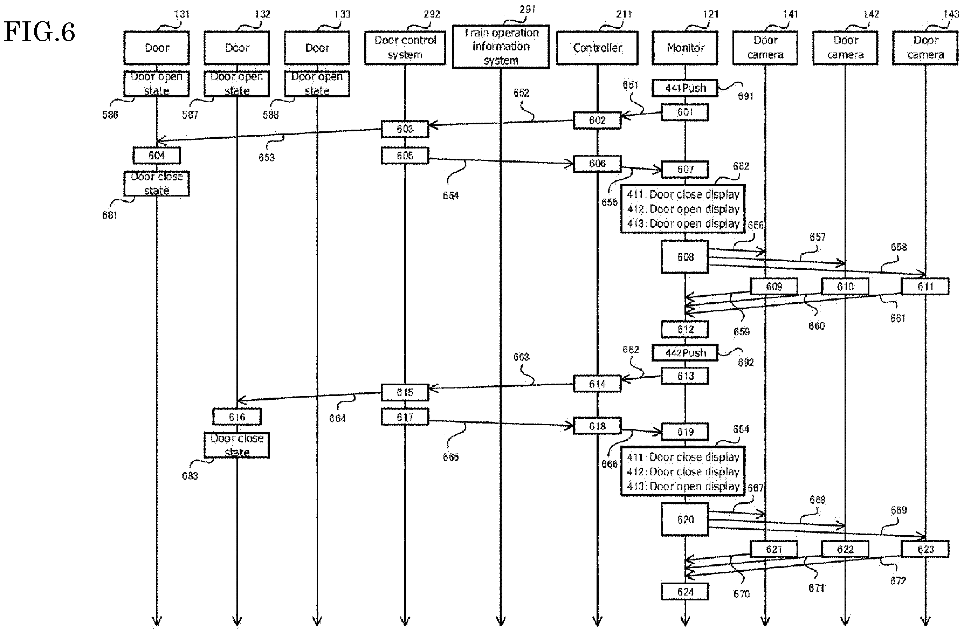

FIG. 6 shows the operation when passengers get on and off after the simultaneous door opening at the station shown in FIG. 5 and before some doors are closed. The initial state in FIG. 6 is the same as the final state in FIG. 5.

At the time when no passengers get on or off through the door 131 after the start of the passengers getting on and off the train, the trainman pushes the individual door close button 441 that is displayed on the monitor 121 (operation 691).

The monitor 121 allows the operation detector 314 to detect this pushing operation and transmits the communication signal 651 that includes a report of the individual door close button 441 being pushed to the controller 211 from the controller communication unit 311 (process 601).

The controller 211 receives the communication signal 651 in the monitor communication unit 303. Then, the communication signal 652 that includes a door close instruction for the door 131 is transmitted to the door control system 292 from the door opening/closing communication unit 302 (process 602).

The door control system 292 receives the communication signal 652 and transmits the communication signal 653 that includes a door close instruction to the door 131 (process 603).

The door 131 receives the communication signal 653 and closes (process 604). As a result, the door 131 becomes of the door close state 681.

The door control system 292 confirms that the door 131 is in the door close state, and then transmits the communication signal 654 that includes a report of the completion of the door closing of the door 131 to the controller 211 (process 605).

The controller 211 receives the communication signal 654 in the door opening/closing communication unit 302. Then, the control unit 305 determines that the door camera image display region 411 is turned to the door close display state, the door camera image display region 412 is turned to the door open display state, and the door camera image display region 413 is turned to the door open display state, and transmits the communication signal 655 that includes an instruction to this effect to the monitor 121 from the monitor communication unit 303 (process 606).

The monitor 121 receives the communication signal 655 in the controller communication unit 311. Then, the display 313 follows the received instruction and switches the door camera image display region 411 to the door close display state, the door camera image display region 412 to the door open display state, and the door camera image display region 413 to the door open display state (state 682). In this example, the door open display state is a state where a door camera image is displayed with color, and the door close display state is a state where a door camera image is displayed with grey (process 607).

At this time, the monitor 121 allows the image communication unit 312 to start the door camera image acquisition process (this has already been carried out repeatedly in this example, and therefore is continued), and transmits the communication signal 656 that includes an image request for the door camera 141, the communication signal 657 that includes an image request for the door camera 142, and the communication signal 658 that includes an image request for the door camera 143, respectively (process 608).

The door camera 141 receives the communication signal 656 in the image transmitter 322. Then, the image transmitter 322 follows the received request and transmits the communication signal 659 that includes an image generated in the image generator 321 to the monitor 121 (process 609).

The door camera 142 receives the communication signal 657 in the image transmitter 322. Then, the image transmitter 322 follows the received request and transmits the communication signal 660 that includes an image generated in the image generator 321 to the monitor 121 (process 610).

The door camera 143 receives the communication signal 658 in the image transmitter 322. Then, the image transmitter 322 follows the received request and transmits the communication signal 661 that includes an image generated in the image generator 321 to the monitor 121 (process 611).

The monitor 121 receives the communication signals 659, 660 and 661, respectively, in the image communication unit 312. The display 313 decodes each image (color image) that is included in the respective received communication signals. Furthermore, a grey scale conversion is carried out on the image from the door camera 141 that has been received through the communication signal 659. Then, the image from the door camera 141, the image from the door camera 142, and the image from the door camera 143 are displayed in the door camera image display region 411, the door camera image display region 412, and the door camera image display region 413, respectively. At this time, the display 313 resizes each door camera image to the display size of the corresponding door camera image display region for display (process 612).

Though not shown, the processes 608 to 612 are carried out repeatedly while the present state continues.

Subsequently, at the time when no passengers get on or off through the door 132, the trainman pushes the individual door close button 442 that is displayed on the monitor 121 (operation 692).

The monitor 121 allows the operation detector 314 to detect this pushing operation and transmits the communication signal 662 that includes a report of the individual door close button 442 being pushed to the controller 211 from the controller communication unit 311 (process 613).

The controller 211 receives the communication signal 662 in the monitor communication unit 303. Then, the communication signal 663 that includes a door close instruction for the door 132 is transmitted to the door control system 292 from the door opening/closing communication unit 302 (process 614).

The door control system 292 receives the communication signal 663 and transmits the communication signal 664 that includes a door close instruction for the door 132 (process 615).

The door 132 receives the communication signal 664 and closes (process 616). As a result, the door 132 becomes of the door close state 683.

The door control system 292 confirms that the door 132 is in the door close state, and then transmits the communication signal 665 that includes a report of the completion of the door closing of the door 132 to the controller 211 (process 617).

The controller 211 receives the communication signal 665 in the door opening/closing communication unit 302. Then, the control unit 305 determines that the door camera image display region 411 is turned to the door close display state, the door camera image display region 412 is turned to the door close display state, and the door camera image display region 413 is turned to the door open display state, and transmits the communication signal 666 that includes an instruction to this effect to the monitor 121 from the monitor communication unit 303 (process 618).

The monitor 121 receives the communication signal 666 in the controller communication unit 311. Then, the display 313 follows the received instruction and switches the door camera image display region 411 to the door close display state, the door camera image display region 412 to the door close display state, and the door camera image display region 413 to the door open display state (state 684). In this example, the door open display state is a state where a door camera image is displayed with color, and the door close display state is a state where a door camera image is displayed with grey (process 619).

At this time, the monitor 121 allows the image communication unit 312 to start the door camera image acquisition process (which has already been carried out repeatedly in this example, and therefore is continued), and transmits the communication signal 667 that includes an image request for the door camera 141, the communication signal 668 that includes an image request for the door camera 142, and the communication signal 669 that includes an image request for the door camera 143, respectively (process 620).

The door camera 141 receives the communication signal 667 in the image transmitter 322. Then, the image transmitter 322 follows the received request and transmits the communication signal 670 that includes an image generated in the image generator 321 to the monitor 121 (process 621).

The door camera 142 receives the communication signal 668 in the image transmitter 322. Then, the image transmitter 322 follows the received request and transmits the communication signal 671 that includes an image generated in the image generator 321 to the monitor 121 (process 622).

The door camera 143 receives the communication signal 669 in the image transmitter 322. Then, the image transmitter 322 follows the received request and transmits the communication signal 672 that includes an image generated in the image generator 321 to the monitor 121 (process 623).

The monitor 121 receives the communication signals 670, 671 and 672, respectively, in the image communication unit 312. The display 313 decodes each image (color image) that is included in the respective received communication signals. Furthermore, a grey scale conversion is carried out on the image from the door camera 141 that has been received through the communication signal 670 and the image from the door camera 142 that has been received through the communication signal 671. Then, the image from the door camera 141, the image from the door camera 142, and the image from the door camera 143 are displayed in the door camera image display region 411, the door camera image display region 412, and the door camera image display region 413, respectively. At this time, the display 313 resizes each door camera image to the display size of the corresponding door camera image display region for display (process 624).

Though not shown, the processes 620 to 624 are carried out repeatedly while the present state continues.

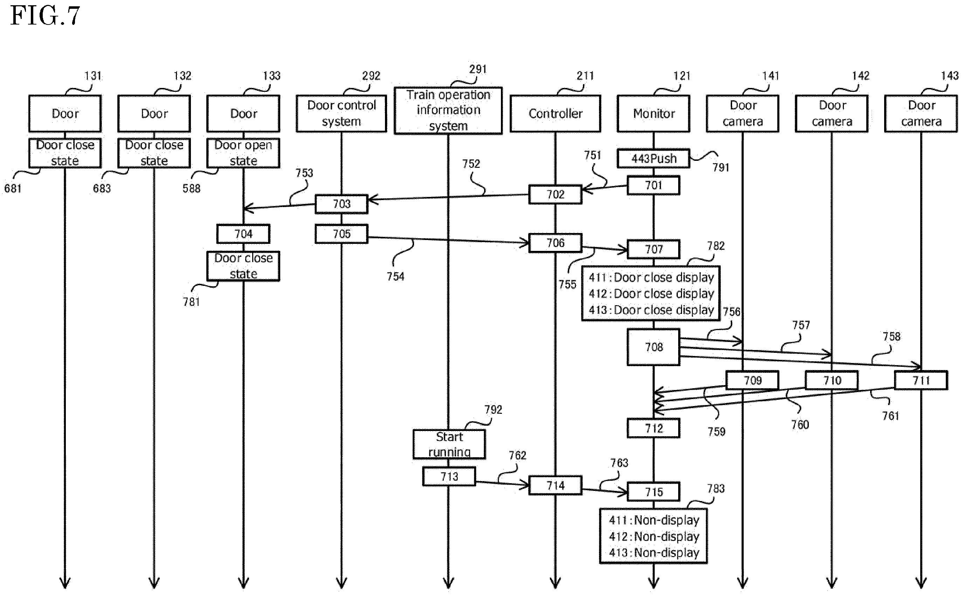

FIG. 7 shows the operation where all the doors are closed after the closing of the door 132 shown in FIG. 6, the completion of the passengers getting on and off, and before the restart of the running of the train. The initial state in FIG. 7 is the same as the final state in FIG. 6.

At the time when no passengers are getting on or off through the door 133 that is the last open door, the trainman pushes the individual door close button 443 that is displayed on the monitor 121 (operation 791).

The monitor 121 allows the operation detector 314 to detect this pushing operation and transmits the communication signal 751 that includes a report of the individual door close button 443 being pushed to the controller 211 from the controller communication unit 311 (process 701).

The controller 211 receives the communication signal 751 at the monitor communication unit 303. Then, the communication signal 752 that includes a door close instruction for the door 133 is transmitted to the door control system 292 from the door opening/closing communication unit 302 (process 702).

The door control system 292 receives the communication signal 752 and transmits the communication signal 753 that includes a door close instruction for the door 133 (process 703).

The door 133 receives the communication signal 753 and closes (process 704). As a result, the door 133 becomes of the door close state 781.

The door control system 292 confirms that the door 133 is in the door close state, and then transmits the communication signal 754 that includes a report of the completion of the door closing of the door 133 to the controller 211 (process 705).

The controller 211 receives the communication signal 754 in the door opening/closing communication unit 302. Then, the control unit 305 determines that the door camera image display region 411 is turned to the door close display state, the door camera image display region 412 is turned to the door close display state, and the door camera image display region 413 is turned to the door close display state, and transmits the communication signal 755 that includes an instruction to this effect to the monitor 121 from the monitor communication unit 303 (process 706).

The monitor 121 receives the communication signal 755 in the controller communication unit 311. Then, the display 313 follows the received instruction and switches the door camera image display region 411 to the door close display state, the door camera image display region 412 to the door close display state, and the door camera image display region 413 to the door close display state (state 782). In this example, the door close display state is a state where a door camera image is displayed with grey (process 707).

At this time, the monitor 121 allows the image communication unit 312 to start the door camera image acquisition process (which has already been carried out repeatedly in this example, and therefore is continued), and transmits the communication signal 756 that includes an image request for the door camera 141, the communication signal 757 that includes an image request for the door camera 142, and the communication signal 758 that includes an image request for the door camera 143, respectively (process 708).

The door camera 141 receives the communication signal 756 in the image transmitter 322. Then, the image transmitter 322 follows the received request and transmits the communication signal 759 that includes an image generated in the image generator 321 to the monitor 121 (process 709).

The door camera 142 receives the communication signal 757 in the image transmitter 322. Then, the image transmitter 322 follows the received request and transmits the communication signal 760 that includes an image generated in the image generator 321 to the monitor 121 (process 710).

The door camera 143 receives the communication signal 758 in the image transmitter 322. Then, the image transmitter 322 follows the received request and transmits the communication signal 761 that includes an image generated in the image generator 321 to the monitor 121 (process 711).

The monitor 121 receives the communication signals 759, 760 and 761, respectively, in the image communication unit 312. The display 313 decodes each image (color image) that is included in the respective received communication signals, and in addition, carries out a grey scale conversion. Then, the image from the door camera 141, the image from the door camera 142, and the image from the door camera 143 are displayed in the door camera image display region 411, the door camera image display region 412, and the door camera image display region 413, respectively. At this time, the display 313 resizes each door camera image to the display size of the corresponding door camera image display region for display (process 712).

Though not shown, the processes 708 to 712 are carried out repeatedly while the present state continues.

Here, all the doors have become of the close state, and therefore, the train restarts running at the time 792.

At the time when the train starts running, the train operation information system 291 transmits the communication signal 762 that includes information of the start of the running to the controller 211 (process 713).

The controller 211 receives the communication signal 762 in the train operation information receiver 301. Then, the control unit 305 determines that the door camera image display region 411 is turned to the non-display state, the door camera image display region 412 is turned to the non-display state, and the door camera image display region 413 is turned to the non-display state, and transmits the communication signal 763 that includes an instruction to this effect to the monitor 121 from the monitor communication unit 303 (process 714).

The monitor 121 receives the communication signal 763 in the controller communication unit 311. Then, the display 313 follows the received instruction and switches the door camera image display region 411 to the non-display state, the door camera image display region 412 to the non-display state, and the door camera image display region 413 to the non-display state (state 783). In this example, the non-display state is a state where a black image is displayed instead of a door camera image. At this time, the monitor 121 allows the image communication unit 312 to stop the door camera image acquisition process for the door cameras 141 to 143 (process 715).

This state is maintained while the train is running.

The train is operated while repeating the operation sequence that is described in reference to FIGS. 5 to 7.

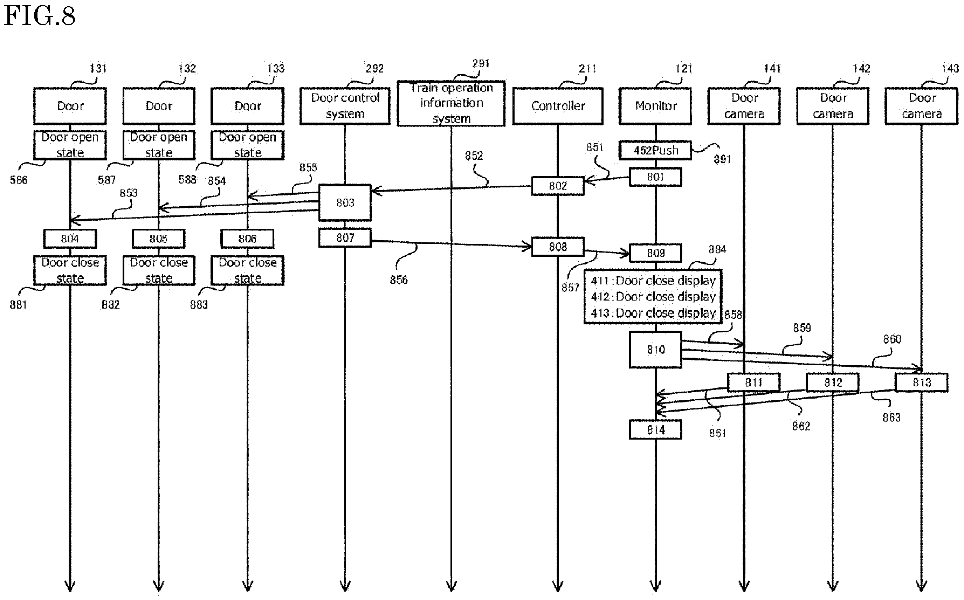

Though the operation sequence for individually closing the doors is described in reference to FIGS. 6 and 7, it is also possible to simultaneously close all the doors. FIG. 8 shows an example of such an operation sequence. The initial state in FIG. 8 is the same as the final state in FIG. 5.

At the time when no passengers are getting on or off through any of the doors, the trainman pushes the simultaneous door close button 452 that is displayed on the monitor 121 (operation 891).

The monitor 121 allows the operation detector 314 to detect this pushing operation and transmits the communication signal 851 that includes a report of the simultaneous door close button 452 being pushed to the controller 211 from the controller communication unit 311 (process 801).

The controller 211 receives the communication signal 851 in the monitor communication unit 303. Then, the communication signal 852 that includes a simultaneous door close instruction is transmitted to the door control system 292 from the door opening/closing communication unit 302 (process 802).

The door control system 292 receives the communication signal 852 and transmits the communication signals 853 to 855 that include a door close instruction to the doors 131 to 133, respectively (process 803).

The doors 131 to 133 respectively receive the communication signals 853 to 855 and open (processes 804 to 806). As a result, the doors 131 to 133 become of the door close states 881 to 883, respectively.

The door control system 292 confirms that all the doors 131 to 133 are in the door close state, and then transmits the communication signal 856 that includes a report of the completion of the simultaneous door close to the controller 211 (process 807).

The controller 211 receives the communication signal 856 in the door opening/closing communication unit 302. Then, the control unit 305 determines that the door camera image display region 411 is turned to the door close display state, the door camera image display region 412 is turned to the door close display state, and the door camera image display region 413 is turned to the door close display state, and transmits the communication signal 857 that includes an instruction to this effect to the monitor 121 from the monitor communication unit 303 (process 808).

The monitor 121 receives the communication signal 857 in the controller communication unit 311. Then, the display 313 follows the received instruction and switches the door camera image display region 411 to the door close display state, the door camera image display region 412 to the door close display state, and the door camera image display region 413 to the door close display state (state 884). In this example, the door close display state is a state where a door camera image is displayed with grey (process 809).

At this time, the monitor 121 allows the image communication unit 312 to start the door camera image acquisition process (which has already been carried out repeatedly in this example, and therefore is continued), and transmits the communication signal 858 that includes an image request for the door camera 141, the communication signal 859 that includes an image request for the door camera 142, and the communication signal 860 that includes an image request for the door camera 143, respectively (process 810).

The door camera 141 receives the communication signal 858 in the image transmitter 322. Then, the image transmitter 322 follows the received request and transmits the communication signal 861 that includes an image generated in the image generator 321 to the monitor 121 (process 811).

The door camera 142 receives the communication signal 859 in the image transmitter 322. Then, the image transmitter 322 follows the received request and transmits the communication signal 862 that includes an image generated in the image generator 321 to the monitor 121 (process 812).

The door camera 143 receives the communication signal 860 in the image transmitter 322. Then, the image transmitter 322 follows the received request and transmits the communication signal 863 that includes an image generated in the image generator 321 to the monitor 121 (process 813).

The monitor 121 receives the communication signals 861, 862 and 863, respectively, in the image communication unit 312. The display 313 decodes each image (color image) that is included in the respective received communication signals, and in addition, carries out a grey scale conversion. Then, the image from the door camera 141, the image from the door camera 142, and the image from the door camera 143 are displayed in the door camera image display region 411, the door camera image display region 412, and the door camera image display region 413, respectively. At this time, the display 313 resizes each door camera image to the display size of the corresponding door camera image display region for display (process 814).

Though not shown, the processes 810 to 814 are carried out repeatedly while the present state continues.

The above description describes the operation sequence in the door image display system according to one embodiment of the present invention.

Here, doors are closed without any problems in the above-described operation sequence; however, a case may occur where doors cannot be closed normally due to a passenger's bag being caught between the doors. Therefore, it is desirable to draw the attention of the trainman by displaying with a highlight the door camera image that shows the doors that have failed to close in the case where there are such doors that fail to close. As for the display of a door camera image with a highlight, only this image may be enlarged for display, the display frame of this image may solely be displayed with thick red lines, or any other various techniques may be used to implement such a display.

The display of a door camera image with a highlight in the case where there are doors that have failed to close can be implemented in the following manner under the control of the controller 211. Here, the controller 211 has stored in the data storage 304 a camera/door correspondence table where the camera IDs for identifying the door cameras and door IDs for identifying the doors are associated with each other and a door/button correspondence table where door IDs for identifying the doors and button IDs for identifying the buttons are associated with each other.

The controller 211 specifies the door that corresponds to the button operated on the monitor 121 on the basis of the door/button correspondence table and transmits the communication signal that includes an instruction to close this door to the door control system 292. In addition, upon the reception of the communication signal that includes a response to the effect that a door has failed to close from the door control system 292, the controller 211 specifies the door camera that corresponds to this door on the basis of the camera/door correspondence table, and transmits the communication signal that includes an instruction to display with a highlight the door camera image for this door to the monitor 121.

As a result, the door camera image for the door that has failed to close is displayed with a highlight on the monitor 121, and therefore, the attention of the trainman is directed to this door. Such a display with a highlight is more effective when the trainman pushes the simultaneous close door button 452 for simultaneously closing all the doors than when the trainman pushes any one of the individual door close buttons 441 to 443 for designating and closing an individual door.

As described above, the door image display system in this example has a configuration where a plurality of cameras (141 to 143) take images of a plurality of doors (131 to 133) of a train, a monitor (121) displays a plurality of door camera images taken by the plurality of cameras and buttons (431 to 433 and 441 to 443) that are provided for the respective door camera images and receive an operation to instruct the opening or closing of the door that is shown in the door camera image, and the controller (211) outputs a communication signal including an instruction to open or close the door that corresponds to the operated button on the monitor in response to the operation of the button. Therefore, the trainman of the train can not only confirm the respective images of the doors on the monitor, but also instruct the opening or closing of an individual door that is designated on the same monitor, and therefore, the burden on the trainman can be reduced while securing the safety of the passengers at the time when the doors of the train are opened or closed.

In addition, the door image display system in this example is configured in such a manner that the controller controls such that the door camera image of the door to be highlighted on the monitor in response to the reception of a communication signal including a response to the effect that the door has failed to close in the case where the communication signal including an instruction to close the doors is outputted. Accordingly, the door camera image that shows the door that has failed to close is displayed with a highlight on the monitor, and therefore, the attention of the trainman can be directed to this door.

Furthermore, the door image display system in this example is configured in such a manner that the controller controls such that the door camera image of the door to be highlighted on the monitor on the basis of a specific station display information that is set for each station and includes the designation of the door of which the door camera image is to be displayed with a highlight in the train stopped at the station. Accordingly, the door camera image that shows a door that is difficult to be closed due to the crowd of passengers caused by a condition specific to a station (for example, the structure of a station) is displayed with a highlight on the monitor in the case where such a door exists, and therefore, the attention of the trainman can be directed to this door.

Here, the configuration of the system and the devices according to the present invention are not necessarily limited to those in the above-described example, and various modifications of the configuration may be used.

For example, the above description relates to a train formed of three cars for the purpose of simplifying the description; however, a train that is formed of cars of which the number is other than three may be used.

In addition, the above-described description relates to the controller and the monitor that are separate devices; however, these may be integrated in the configuration. Concretely, a monitor that is equipped in a train having a plurality of doors and displays a plurality of door camera images gained by taking images of the respective doors by means of cameras may be provided with: a display that displays a plurality of door camera images and buttons that are provided for the respective door camera images and that receive an operation to instruct the opening or closing of the door that is shown in the door camera image; an operation detector that detects the operation of the button; and an opening and closing controller that outputs a communication signal including an instruction to open or close the door that corresponds to the operated button in response to the detection of the operation of the button.

Another example may provide a configuration where the controller and the train operation system are integrated or may provide a configuration where the controller and the door control system are integrated.

According to the above description, the specific station display information is stored in the data storage in the controller within a train; however, the configuration may allow other devices to store the information. For example, the specific station display information may be stored in the train operation information system or the monitor, or may be stored in a device that is installed on the ground so as to be wirelessly transmitted to the train.

According to the above description, the specific station display information stored in the data storage in the controller within a train is used only within this train; however, the configuration may allow the data to be exchanged with another train so that the specific station display information can be shared between a plurality of trains.

According to the above description, the subject to be displayed is images of the door cameras that are installed on the outsides of the cars; however, the subject to be displayed may include images of the door cameras that are installed inside all the cars so as to take images of the doors. As a result, it becomes possible to increase the safety for not only the passengers who are getting into the train, but also the passengers who are getting off the train.

It is also possible for the present invention to provide a method or a system for implementing the process according to the present invention, a program for implementing such a method or system, a storage medium for storing such a program, and the like.

The present invention can be applied to a door image display system for displaying images of a plurality of doors that a train has.

### REFERENCE SIGNS LIST

101 to 103: car
111, 113: cabin
121, 123: monitor
131 to 133: door
141 to 143: door camera
201, 202: network
211: controller
291: train operation information system
292: door control system
301: train operation information receiver
302: door opening/closing communication unit
303: monitor communication unit
304: data storage
305: control unit
311: controller communication unit
312: image communication unit
313: display
314: operation detector
321: image generator
322: image transmitter
401: screen
411 to 413: door camera image display region
421 to 423: door camera image display frame
431 to 433: individual door open button
441 to 443: individual door close button
451: simultaneous door open button
452: simultaneous door close button

## Claims

1. A door image display system to be equipped in a train that has a plurality of doors (131-133), the door image display system comprising:
a plurality of cameras (141-143) that take images of the plurality of doors;
a monitor (121, 123) that displays a plurality of door camera images taken by the plurality of cameras and a button (431-433, 441-443) that receives an operation to instruct the opening or closing of the door shown in a door camera image displayed by the monitor; and
a controller (305) that outputs a communication signal including an instruction to open or close the door that corresponds to the operated button in response to the operation of the button,
wherein, on the basis of a station display information set specific for each station that includes the designation of a door for which the door camera image is to be displayed with a highlight when the train is stopped at the station, the controller controls such that the door camera image of the designated door is highlighted on the monitor.

2. The door image display system according to claim 1, wherein, in the case where a communication signal including an instruction to close the door is outputted, the controller controls such that the door camera image of the instructed door is highlighted on the monitor in response to the reception of a communication signal including a response to the effect that the closure of the door has failed.

## Patentansprüche

1. Türbildanzeigesystem, das in einem Zug eingerichtet werden soll, der eine Mehrzahl von Türen (131-133) aufweist, wobei das Türbildanzeigesystem umfasst:
eine Mehrzahl von Kameras (141-143), die Bilder von der Mehrzahl von Türen aufnehmen;
einen Monitor (121, 123), der eine Mehrzahl von Türkamerabildern anzeigt, die von der Mehrzahl von Kameras aufgenommen wurden, und eine Taste (431-433, 441-443), die einen Vorgang zum Anweisen des Öffnens oder Schließens der Tür empfängt, die in einem von dem Monitor angezeigten Türkamerabild gezeigt wird; und
eine Steuervorrichtung (305), die ein Kommunikationssignal ausgibt, das eine Anweisung zum Öffnen oder Schließen der Tür beinhaltet, die der betätigten Taste entspricht, als Reaktion auf die Betätigung der Taste,
wobei auf der Basis eines für jede Station spezifischen Haltestellenanzeigeinformationssatzes, der die Bezeichnung einer Tür, für die das Türkamerabild mit einer Hervorhebung angezeigt werden soll, beinhaltet, wenn der Zug an einer Haltestelle angehalten hat, die Steuervorrichtung derart steuert, dass das Türkamerabild der bezeichneten Tür auf dem Monitor hervorgehoben wird.

2. Türbildanzeigesystem nach Anspruch 1, wobei in dem Fall, dass ein Kommunikationssignal ausgegeben wird, das eine Anweisung zum Schließen der Tür beinhaltet, die Steuervorrichtung derart steuert, dass das Türkamerabild der angewiesenen Tür auf dem Monitor als Reaktion auf den Empfang eines Kommunikationssignals hervorgehoben wird, das eine Reaktion darauf beinhaltet, dass das Schließen der Tür fehlgeschlagen ist.

## Revendications

1. Système d'affichage d'image de porte à équiper dans un train qui a une pluralité de portes (131-133), le système d'affichage d'image de porte comprenant :
une pluralité de caméras (141-143) qui prennent des images de la pluralité de portes ;
un moniteur (121, 123) qui affiche une pluralité d'images de caméra de porte prises par la pluralité de caméras et un bouton (431-433, 441-443) qui reçoit une opération pour ordonner l'ouverture ou la fermeture de la porte représentée dans une image de caméra de porte affichée par le moniteur ; et
un contrôleur (305) qui sort un signal de communication comprenant une instruction pour ouvrir ou fermer la porte qui correspond au bouton actionné en réponse à l'actionnement du bouton,
dans lequel, sur la base d'un ensemble d'informations d'affichage de station spécifique pour chaque station qui comprend la désignation d'une porte pour laquelle l'image de caméra de porte doit être affichée avec une mise en surbrillance lorsque le train est arrêté à la station, le contrôleur commande de sorte que l'image de caméra de porte de la porte désignée soit mise en surbrillance sur le moniteur.

2. Système d'affichage d'image de porte selon la revendication 1, dans lequel, dans le cas où un signal de communication comprenant une instruction pour fermer la porte est sorti, le contrôleur commande de sorte que l'image de caméra de porte de la porte instruite soit mise en surbrillance sur le moniteur en réponse à la réception d'un signal de communication comprenant une réponse à l'effet que la fermeture de la porte a échoué.
